(19) Europäisches Patentamt / European Patent Office / Office européen des brevets

(11) **EP 1 687 904 B1**

(12) **EUROPEAN PATENT SPECIFICATION**

(45) Date of publication and mention of the grant of the patent:
**28.05.2008 Bulletin 2008/22**

(21) Application number: **04810549.8**

(22) Date of filing: **05.11.2004**

(51) Int Cl.:
*H04B 7/212* (2006.01)     *H04Q 7/22* (2006.01)
*H04B 7/216* (2006.01)     *H04Q 7/38* (2006.01)
*H04J 13/04* (2006.01)     *H04J 13/00* (2006.01)

(86) International application number:
**PCT/US2004/037240**

(87) International publication number:
**WO 2005/048469 (26.05.2005 Gazette 2005/21)**

(54) **WIRELESS COMMUNICATION METHOD AND APPARATUS FOR IMPLEMENTING CALL ADMISSION CONTROL BASED ON COMMON MEASUREMENTS**

DRAHTLOSES KOMMUNIKATIONSVERFAHREN UND VORRICHTUNG ZUM IMPLEMENTIEREN EINER VERBINDUNGSZULASSUNGSREGELUNG AUF DER BASIS GEMEINSAMER MESSUNGEN

PROCEDE DE COMMUNICATION HERTZIENNE ET PROCEDE POUR ETABLIR UNE COMMANDE D'ADMISSION D'APPEL SE BASANT SUR DES MESURES COMMUNES

(84) Designated Contracting States:
**AT BE BG CH CY CZ DE DK EE ES FI FR GB GR HU IE IS IT LI LU MC NL PL PT RO SE SI SK TR**

(30) Priority: **07.11.2003 US 518380 P**

(43) Date of publication of application:
**09.08.2006 Bulletin 2006/32**

(73) Proprietor: **INTERDIGITAL TECHNOLOGY CORPORATION**
**Wilmington, DE 19810 (US)**

(72) Inventor: **CAVE, Christopher**
**Candiac, Québec J5R 4W7 (CA)**

(74) Representative: **Pierrou, Mattias**
**Awapatent AB**
**P.O. Box 45 086**
**104 30 Stockholm (SE)**

(56) References cited:
| | |
|---|---|
| WO-A2-02/05441 | US-A1- 2002 119 796 |
| US-A1- 2003 031 147 | US-A1- 2004 162 081 |
| US-A1- 2005 026 623 | US-B1- 6 459 681 |
| US-B1- 6 801 515 | US-B2- 7 023 798 |

EP 1 687 904 B1

**Description**

FIELD OF INVENTION

The present invention is related to a wireless communication system. More particularly, the present invention is a method and apparatus for admission control based on common measurements performed in a wireless communication system.

BACKGROUND

In wireless communication systems, a wireless transmit/receive unit (WTRU) communicates with a radio access network (RAN) via one or more radio channels which are established upon request from the WTRU or a core network. Upon receiving a call request for radio resources, a call admission control (CAC) process in a radio network controller (RNC) is invoked to process the request. The CAC process determines whether or not a call should be admitted to the system. If the call is admitted, the CAC process determines the most efficient allocation of radio resources.

In order to make such decisions, the CAC process must be aware of the state of the system at the time when the request is received. Power and interference measurements are typically used to characterize the current state of the system. Measurements may be made by a Node-B or a WTRU. Measurements made by a Node-B may include uplink (UL) interference, downlink (DL) carrier power level, and/or DL code transmission power. Measurements made by a WTRU may include UL total transmission power level, UL code transmission power level, DL interference, and/or path loss.

In many cases, measurements made by a WTRU are not available at the RNC. Thus, the CAC process must rely only on measurements made by a Node-B for admission control and resource allocation. Accordingly, a method and apparatus for implementing call admission control and resource allocation based only on measurements made by a Node-B is desired.

US 2003/0031147 discloses assignment of physical channels to a set of time slots in a hybrid time division multiple access/code division multiple access wireless communication system. The time slots are arranged in sequences of decreasing quality. It is attempted to assign the physical channels to the time slots in a time slot order of a sequence. If a transmitter exceeds its transmit power level or if a noise rise exceeds a threshold, a time slot cannot accept the physical channel and assignment of the channel to the next time slot is attempted. A physical channel is assigned to acceptable time slots such that the lowest time slot fragmentation adjusted interference level for the channel is achieved.

SUMMARY

A method and apparatus for implementing call admission control based on Node-B measurements in a wireless communication system is disclosed. The apparatus may be an integrated circuit (IC), Node-B or a wireless communication system. A coverage area of the wireless communication system is divided into a plurality of cells and each cell is served by a Node-B. Once a call request is received, a code is selected among available codes for potential allocation. A target cell load and a neighbor cell load for each of the available timeslots is calculated assuming additional allocation of the selected code to each of the timeslots using Node-B measurements. A weighted system load for the timeslot is calculated. A timeslot having a smallest weighted system load is selected for allocation of the code.

BRIEF DESCRIPTION OF THE DRAWINGS

A more detailed understanding of the invention may be had from the following description of a preferred example, given by way of example and to be understood in conjunction with the accompanying drawing wherein:

Figure 1 is a flow diagram of a process including method steps for implementing CAC based on UL measurements in accordance with the present invention;

Figure 2 is a flow diagram of a process including method steps for implementing CAC based on DL measurements in accordance with the present invention;

Figure 3 is a diagram of a wireless communication system model in accordance with the present invention; and

Figure 4 is a block diagram of an apparatus used to implement CAC in the system of Figure 3.

DETAILED DESCRIPTION OF THE PREFERRED EMBODIMENTS

The present invention will be explained, for simplicity, in the context of a universal mobile telephone system (UMTS). However, it should be noted that the present invention may be implemented in any type of wireless communication system based on hybrid time division multiple access (TDMA)-code division multiple access (CDMA).

The features of the present invention may be incorporated into an integrated circuit (IC) or be configured in a circuit comprising a multitude of interconnecting components.

Hereafter, the terminology "WTRU" includes but is not limited to a user equipment, a mobile station, a fixed or mobile subscriber unit, a pager, or any other type of device capable of operating in a wireless environment. When referred to hereafter, the terminology "Node-B" includes but is not limited to a base station, a site controller, an access point or any other type of interfacing device in a wireless environment.

A CAC process of the present invention utilizes common measurements (i.e. measurements not dedicated to any specific radio link) made by a Node-B. The measurements may be either UL measurements or DL measurements. Optionally, the CAC process may utilize path loss information reported by a WTRU. When path loss information is available, the CAC process uses it. When path loss information is not available, a path loss parameter is used as an input, which will be explained hereinafter.

The UL measurement-based CAC process of the present invention uses a load metric of the target and neighboring cells in order to make a call admission decision and assign physical radio resources to the requested call.

With respect to load computation for target cell(s), a predicted interference level, $ISCP_{PRED}(i,t)$, resulting from the addition of one or more codes in timeslot $t$ of cell $i$ is preferably predicted using a noise rise function of the target cell, $R_T$.

$$ISCP_{PRED}(i,t) = ISCP(i,t) \times R_T\big(ISCP(i,t), A(i), SIR\big); \qquad \text{(Equation 1)}$$

where $ISCP(i,t)$ is a UL timeslot interference signal code power (ISCP) measurement measured by the Node-B, $A(i)$ is a path loss to the target cell, and $SIR$ is a sum of the chip-level SIR targets of the added codes. The noise rise function, $RT$ is preferably given by:

$$R_T = \cfrac{1}{1 - \left(\cfrac{I_0}{\theta} - 1\right)\cfrac{L}{q + \cfrac{1}{G_c}}\,SIR}; \qquad \text{(Equation 2)}$$

where $\theta$ is a thermal noise level, $L$ is a path loss, $q$ is a load of the cell, and $Gc$ is a link gain.

The CAC process of the present invention may operate using only the measurements made by the Node-B, and does not have to use a path loss measurement reported from a WTRU. However, if a path loss measurement reported by the WTRU is available, such as during a handover, the path loss measurement is used as an input to the noise rise function, $R_T$. Otherwise, a path loss value parameter is used instead of a path loss measurement. The path loss value parameter should be determined from the distribution of path losses measured throughout the cell through operation, administration and maintenance (OA&M). For example, the 50th percentile path loss for a given cell deployment may be used.

The estimated load in a particular timeslot $t$ of cell $i$ is preferably computed as follows:

$$L(i,t) = 1 - \cfrac{N_O}{ISCP_{PRED}(i,t)}; \qquad \text{(Equation 3)}$$

where $N_O$ represents the receiver noise level. The estimated load, $L(i,t)$, is used to evaluate the admission of the requested resource units in the timeslot.

With respect to load computation for neighboring cells, the load of timeslot $t$ in neighboring cell j is computed as follows:

$$L(j,t) = 1 - \cfrac{N_O}{ISCP(j,t)}; \qquad \text{(Equation 4)}$$

for all $j \neq i$. The current ISCP measurement of Node $B_j$ is available to the target cell and used as an input for the load computation. The resulting load, $L(j,t)$, is used to evaluate the admission of the requested resource units in the timeslot.

In an alternate embodiment, the load of timeslot $t$ in neighboring cell j may be computed using the noise rise in neighboring cell $j$. In this embodiment, a noise rise function of neighboring cells may be estimated using a noise rise function of the target cell to estimate the increase of interference in neighboring cells assuming a code(s) is assigned thereto as follows:

$$R_N = R_T\big(1 + G_C \times A(i) \times SIR\big); \qquad \text{(Equation 5)}$$

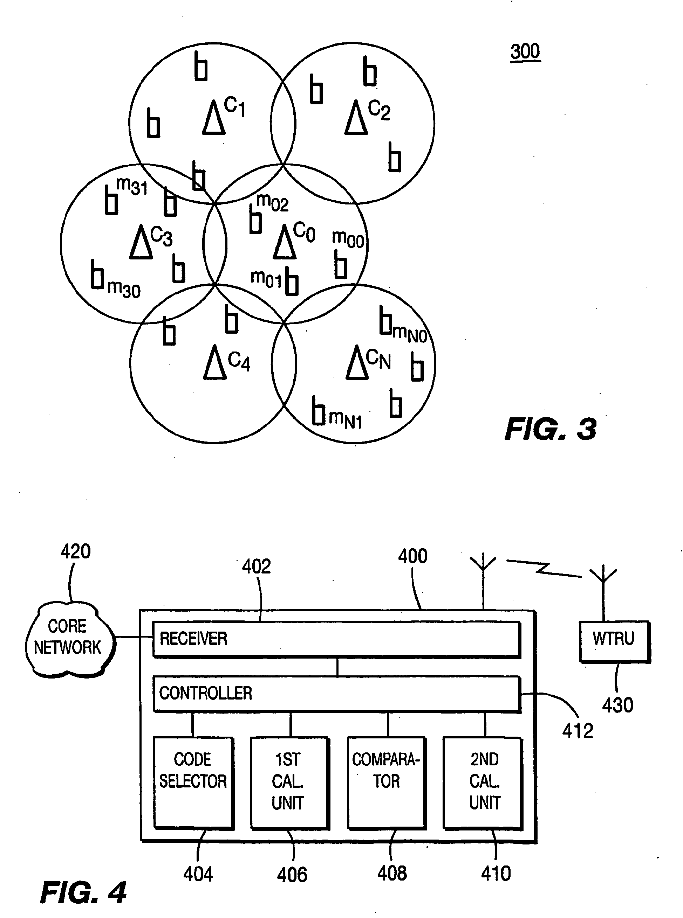

where $R_T$ is given in Equation 2, $G_C$ is a calibration parameter, A(i) represents the path loss to the target cell and *SIR* is the sum of the chip-level SIR targets of the added codes. The derivation of a noise rise function of neighboring cells from a noise rise function of a target cell is explained in more detail with reference to Figure 3. In this embodiment, Equation 4 is replaced with:

$$L(j,t) = 1 - \frac{N_O}{ISCP(j,t) \times R_N}.$$  (Equation 6)

The allocation of one or more codes in timeslot *t* of cell *i* is accepted if and only if the following conditions are satisfied:

$$L(i,t) < LT_{MAX} ; \text{ and}$$  (Equation 7)

$$L(j,t) < LN_{MAX} ;$$  (Equation 8)

for all neighboring cells j under consideration. *L(i,t)* and *L(j,t)* are computed as described in Equation 3 and Equation 4 (or alternatively, Equation 6), respectively. $LT_{MAX}$ and $LN_{MAX}$ represent the load thresholds for the target cell and neighboring cells.

It is noted that the allocation of a code(s) to a timeslot must satisfy WTRU capability requirements; otherwise, the allocation of the set of codes is rejected. For example, the UMTS standard defines a plurality of different classes of WTRUs. Each class is defined by a different set of capabilities. One of the capability requirements of a WTRU is the number of codes that the WTRU supports in a single timeslot, as well as the number of different timeslots the WTRU can simultaneously support. The lower class WTRUs support less codes per timeslot, whereas the higher class WTRUs support more codes per timeslot. A Node-B is aware of the WTRU class and hence, of the WTRU's capabilities in terms of the number of supported codes per timeslot and the number of supported timeslots. Therefore, before actually allocating codes to a particular WTRU in a given timeslot, it should be confirmed that the WTRU can handle the number of allocated codes in the timeslot.

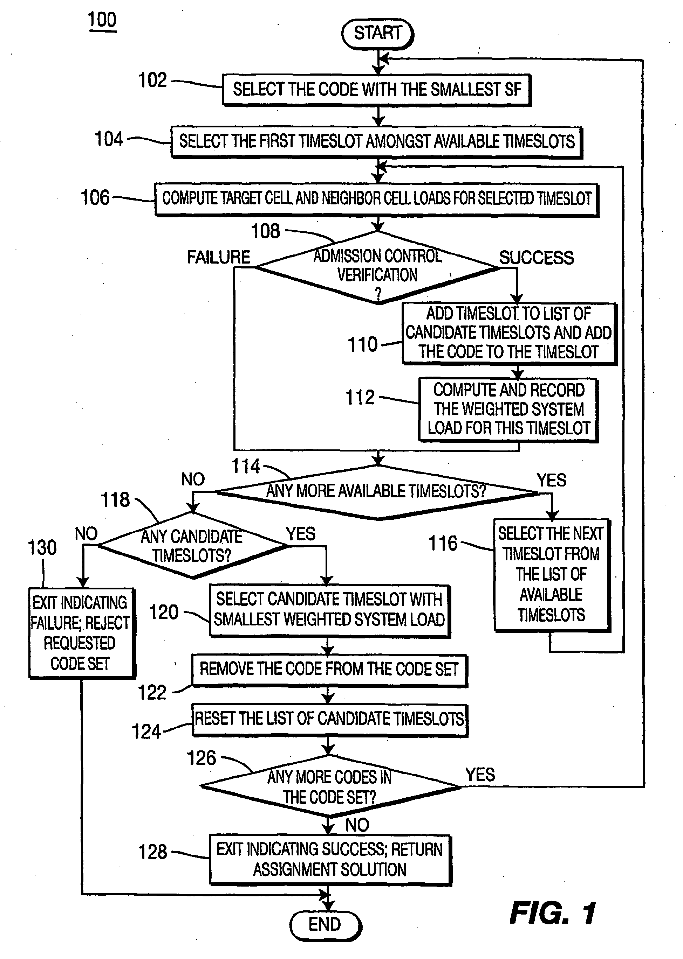

Figure 1 is a flow diagram of a process 100 including method steps for implementing CAC based on UL measurements in accordance with the present invention. When a wireless communication system receives a call request for a WTRU, a code is selected from a list of available code sets (step 102). The selected code is preferably the code with the smallest spreading factor (SF) in the code set. A first timeslot is also selected for potential allocation amongst available timeslots (step 104). The set of available timeslots consists of all timeslots that are available for the requested service type, (e.g., real time (RT) or non-real time (NRT)), and direction, (i.e., UL or DL). The set of available timeslots is set through OA&M.

The process computes a target cell load and a neighboring cell load for the selected timeslot assuming the selected code is added to the selected timeslot in accordance with Equation 3 and Equation 4 (or alternatively, Equation 6) (step 106). In Equation 3, the load computation considers all codes from the code set that have already been allocated to the selected timeslot.

The process 100 then verifies CAC by determining whether the estimated target cell load and a neighboring cell load are below predetermined thresholds, respectively (step 108). If either the estimated target cell load or the estimated neighboring cell load is not below the thresholds, the code is not added to the timeslot for allocation, and the process proceeds to step 114. If both the estimated target cell load and the estimated neighboring cell load are below the thresholds, the selected code is added to the timeslot, at which point the timeslot becomes a candidate timeslot for potential allocation of the selected code and is added to a list of candidate timeslots (step 110). Once the code is added to the timeslot, a weighted system load is computed for the timeslot at step 112 as follows:

$$L_{SYSTEM}(t) = \frac{L(i,t) + \sum_{j=1,}^{3_1} \alpha_1 L(j,t) + \sum_{j=1,}^{3_2} \alpha_2 L(j,t)}{1 + \eta N(t)} ;$$  (Equation 9)

4

where $\mathfrak{I}_1 J_1$ and $\mathfrak{I}_2$ define respectively the set of tier one and tier two neighboring cells to be included in the overall system load. $\alpha_1$ and $\alpha_2$ represent weighting factors to be applied to tier one and tier two cell loads. The denominator, $1+\eta N(t)$, is a fragmentation adjustment factor, where $\eta$ corresponds to the fragmentation adjustment parameter and $N(t)$ corresponds to the number of codes already assigned to the timeslot. Once the weighted system load has been computed, the process 100 proceeds to step 114.

If it is determined that there are more available timeslots at step 114, the next timeslot is selected from the list of available timeslots (step 116), and the process 100 returns to step 106. If there are no available timeslots for computing a weighted system load, the process 100 determines whether there are any candidate timeslots (step 118). If there are no candidate timeslots, the process 100 indicates a failure of allocation of resources and rejects the requested code set (step 130). If there are candidate timeslots, a timeslot having a smallest weighted system load, $L_{SYSTEM}(t)$ is selected thereby resulting in allocation of the selected code in the selected candidate timeslot (step 120). The allocated code is removed from a list of available code sets (step 122), and a list of candidate timeslots is reset (step 124). If there are more available codes in a code set, as determined in step 126, the process 100 returns to step 102. If not, the process 100 proceeds to step 128 where the process 100 indicates a successful allocation of resources and returns a resource assignment solution for the call request (step 128).

The DL measurement-based CAC process of the present invention uses a transmit carrier power of the target cell and neighboring cells in order to make an admission decision and assign physical resources to a requested call. The DL ISCP is predicted using carrier powers of neighboring cells. The DL ISCP in timeslot $t$ of a WTRU located in cell $i$ , $I_{DL}(i,t)$, can be expressed according to:

$$I_{DL}(i,t) = N_O + \sum_{j \in \mathfrak{I}_1} \frac{P_T(j,t)}{A(j)} + \sum_{j \in \mathfrak{I}_2} \frac{P_T(j,t)}{A(j)}; \qquad \text{(Equation 10)}$$

where No represents a receiver noise level, A($j$) represents a path loss between a WTRU and a cell $j$ , and $P_T(j,t)$ represents a total DL transmit power of cell $j$ in timeslot $t$. All quantities are expressed using a linear scale. $\mathfrak{I}_1$ and $\mathfrak{I}_2$ define respectively the set of tier one and tier two neighboring cells to be included in the interference prediction. The information about carrier transmission powers of neighboring cells is available to a target cell. However, the information about a path loss from the WTRU to neighboring cells is not available to the target cell. Therefore, the DL ISCP is estimated as follows:

$$E[I_{DL}(i,t)] = N_O + \sum_{j \in \mathfrak{I}_1} E[X_1] P_T(j,t) + \sum_{j \in \mathfrak{I}_2} E[X_2] P_T(j,t)$$
$$= N_O + \mu_1 \sum_{j \in \mathfrak{I}_1} P_T(j,t) + \mu_2 \sum_{j \in \mathfrak{I}_2} P_T(j,t) \qquad ; \text{ (Equation 11)}$$

where $X_1$ is a random variable corresponding to a link gain (i.e. inverse of a path loss) between the WTRU and a neighboring tier 1 cell Node B, $X_2$ is a random variable corresponding to a link gain between the WTRU and a neighboring tier 2 cell Node B, and $\mu_1$ and $\mu_2$ represent the mean link gains between the WTRU located in the target cell and the Node Bs serving tier 1 and tier 2 cells. The mean link gains are cell deployment-specific parameters which are set through OA&M.

Once the expected interference level is calculated, the interference resulting from the addition of one or multiple codes in timeslot $t$ of cell $i$ is predicted as follows using the noise rise function of the target cell described in Equation 2:

$$I_{DL}^{PRED}(i,t) = E[I_{DL}(i,t)] \times R_T \left( E[I_{DL}(i,t)], A(i), SIR \right); \qquad \text{(Equation 12)}$$

where $A(i)$ represents a path loss to the target cell and SIR represents a sum of the chip-level SIR targets of the added codes.

If the WTRU path loss measurement is available to the target cell, such as during a handover, the WTRU path loss measurement is used as an input for calculating the target cell noise rise function. Otherwise, a path loss value parameter is used, which is set through OA&M. The path loss value parameter should be determined from the distribution of path losses measured throughout the target cell.

The carrier power resulting from the addition of one or multiple codes in timeslot *t* of cell *i* is predicted as follows:

$$P_T^{PRED}(i,t) = P_T(i,t) \times R_T \left( E\left[ I_{DL}(i,t) \right], A(i), SIR \right) + I_{DL}^{PRED}(i,t) \times A(i) \times SIR ;$$

**(Equation 13)**

where A(i) and *SIR* represent respectively the path loss to the target cell and the sum of the chip-level SIR targets of the added codes. The increase of interference resulting from the addition of the code is applied to existing codes as well. This is achieved by multiplying the current transmission power by the noise rise: The resulting predicted carrier transmission power, $P_T^{PRED}(i,t)$, is expressed in Watts.

In an alternate embodiment, the carrier power in neighboring cells can be predicted according to:

$$P_T^{PRED}(j,t) = P_T(j,t) \times R_N ; \qquad \text{(Equation 14)}$$

where $R_N$ is calculated according to Equation 5.

The allocation of a set of codes in timeslot *t* of cell *i* is accepted if and only if the following conditions are satisfied:

$$\left( 10 \log_{10} \left( P_T^{PRED}(i,t) \right) - M_T \right) < P_T^{MAX} ; \text{ and} \qquad \text{(Equation 15)}$$

$$\left( 10 \log_{10} \left( P_T(j,t) \right) - M_N \right) < P_T^{MAX} ; \qquad \text{(Equation 16)}$$

for all neighboring cells *j* under consideration. $P_T^{PRED}(i,t)$ is computed as described in Equation 13. $M_T$ and $M_N$ represent respectively CAC power margins for the target and neighbor cells. $P_T^{MAX}$ corresponds to the maximum Node-B timeslot carrier power, expressed in dB, which is set through OA&M.

If the carrier power is predicted in neighboring cells according to Equation 14, then Equation 16 is replaced by:

$$\left( 10 \log_{10} \left( P_T^{PRED}(j,t) \right) - M_N \right) < P_T^{MAX} . \qquad \text{(Equation 17)}$$

Moreover, the allocation of the set of codes must satisfy WTRU capability requirements; otherwise, the allocation of the set of codes is rejected.

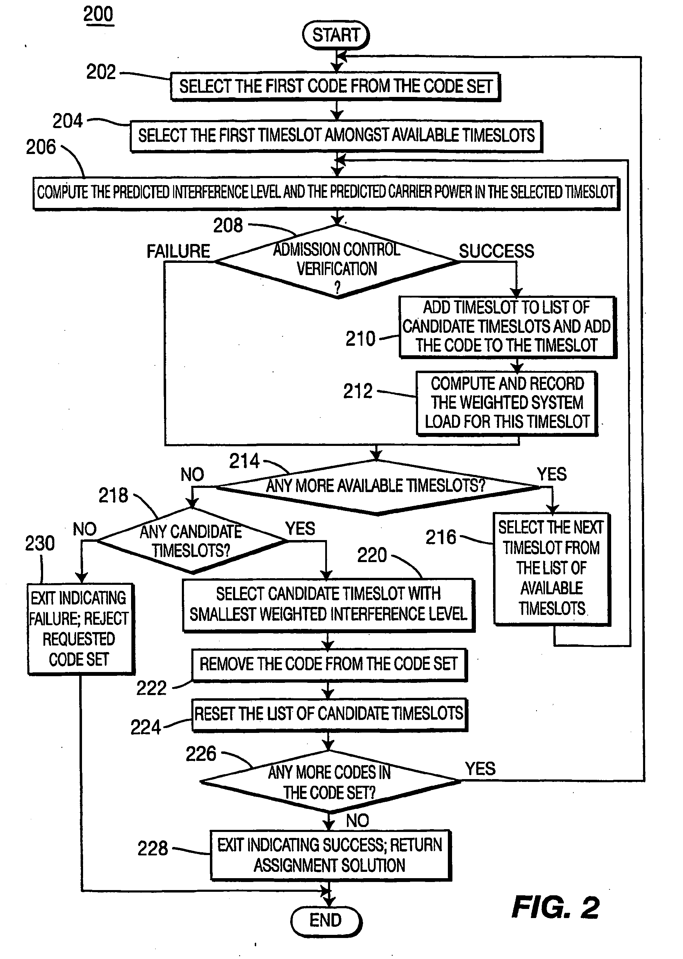

Figure 2 is a flow diagram of a process 200 including method steps for implementing CAC based on DL measurements in accordance with the present invention. When a wireless communication system receives a call request for a WTRU, a code is selected from a list of available code sets (step 202). Under the current third generation partnership project (3GPP), only SF 16 codes are used for DL. However, other SF codes may be used for DL. Thus, a code may be selected, starting from a code having a smallest spreading factor (SF) in the code set. A first timeslot is also selected for potential allocation amongst available timeslots (step 204). The set of available timeslots consists of all timeslots that are available for the requested service type, (e.g., RT or NRT), and direction, (i.e., UL or DL). The set of available timeslots is set through OA&M.

The process 200 computes a predicted interference level and carrier transmission power of a target cell and a predicted interference level and carrier transmission power of neighboring cells for the selected timeslot assuming the selected code is added to the selected timeslot in accordance with Equation 12 and Equation 13 (or alternatively, Equation 14) (step 206). In Equations 12 and 13, the computation considers all codes from the code set that have already been allocated to the selected timeslot.

The process 200 then verifies admission control by determining whether the estimated target cell carrier transmission power and a neighboring cell carrier transmission power are below predetermined thresholds, respectively (step 208). If both the estimated target cell carrier transmission power and the estimated neighboring cell carrier transmission power are below the thresholds, the selected code is added to the timeslot, at which point the timeslot becomes a candidate timeslot for potential allocation of the selected code and is added to a list of candidate timeslots (step 210). If either the estimated target cell carrier transmission power or the estimated neighboring cell carrier transmission power is not below the thresholds, the code is not added to the timeslot for allocation, and the process proceeds to step 214.

Once the code is added to the timeslot, a weighted interference level is computed for the timeslot at step 212 as follows:

$$I_{DL}^{W}(i,t) = \frac{I_{DL}^{PRED}(i,t)}{1+\gamma N(t)}. \qquad \text{(Equation 18)}$$

The denominator, $1+\gamma N(t)$, is a fragmentation adjustment factor, where $\gamma$ corresponds to the fragmentation adjustment parameter and $N(t)$ corresponds to the number of codes already assigned to this timeslot.

If it is determined that there are more available timeslots at step 214, the next timeslot is selected from the list of available timeslots (step 216), and steps 202-214 are repeated. If there are no available timeslots for computing a weighted interference level, the process 200 determines whether there are any candidate timeslots (step 218). If there are no candidate timeslots, the process 200 indicates a failure of allocation of resources and rejects the requested code set (step 230). If there are candidate timeslots, a timeslot having a smallest weighted interference level, $I_{DL}^{W}(i,t)$ is selected thereby resulting in allocation of the selected code in the selected candidate timeslot (step 220). The allocated code is removed from a list of available code sets (step 222), and a list of candidate timeslots is reset (step 224). If there are more codes in a code set, the process returns to step 202 for evaluation of each code, and if not, the process proceeds to step 228 (step 226). In step 228, the process 200 indicates a successful allocation of resources and returns a resource assignment solution for the call request.

The derivation of the noise rise function for neighboring cells from a noise rise function of the target cell is explained in more detail with reference to Figure 3. Figure 3 is a diagram of a wireless communication system model 300 in accordance with the present invention. There are a total of $N+1$ cells $C_0$-$C_N$ and the number of WTRUs $m_{i1}$-$m_{iN}$ in cell $C_i$ is $N_i+1$. The WTRUs $m_{i1}$-$m_{iN}$ served by cell $C_i$ are denoted by $\{m_{ij}\}$. The analysis presented hereinafter applies for both UL and DL.

$I_{ij}$ is an interference level seen by WTRU $m_{ij}$ (for DL) or by a Node-B serving WTRU $m_{ij}$ (for UL). The required transmission power for serving a WTRU $m_{ij}$ is equal to:

$$P_{ij} = I_{ij}\, SIR_{ij}\, L_{ij} \qquad \text{(Equation 19)}$$

where $L_{ij}$ is a path loss between a cell $C_i$ and a WTRU $m_{ij}$, and $SIR_{ij}$ is a required signal-to-interference ratio to adequately serve the WTRU $m_{ij}$. This power is transmitted either by the WTRU $m_{ij}$ (in case of UL) or by its serving Node-B (in case of DL).

Equation 19 can be re-written:

$$P_{ij} = I_{ij}\, q_{ij} \qquad \text{(Equation 20)}$$

where $q_{ij} \equiv SIR_{ij}\, L_{ij}$ is defined as the "load" of the WTRU $m_{ij}$. The load $q_i$ of cell $C_i$ is defined as follows:

$$q_i \equiv \sum_{j=0}^{N_i} q_{ij}. \qquad \text{(Equation 21)}$$

The interference level $I_{ij}$ can be calculated, for a system where sarne-cell WTRUs cause negligible interference, as follows:

$$I_{ij} = \theta + \sum_{\substack{i'=0 \\ i' \neq i}}^{N} \sum_{j'=0}^{N_{i'}} \frac{P_{i'j'}}{L_{i'j'ij}} = \theta + \sum_{\substack{i'=0 \\ i' \neq i}}^{N} \sum_{j'=0}^{N_{i'}} \frac{q_{i'j'} I_{i'j'}}{L_{i'j'ij}} \qquad \text{(Equation 22)}$$

where $\theta$ is a thermal noise level, and $L_{i'j'ij}$ is a path loss between the WTRU $m_{ij}$ and the cell $C_{i'}$ (for DL) or between the WTRU $m_{i'j'}$ and the cell $C_i$ (for UL).

A link gain (inverse of a path loss) between a cell and a WTRU connected to another cell is equal to $G_c$.

$$L_{i'j'ij} = \frac{1}{G_c} \text{ if } i' \neq i. \qquad \text{(Equation 23)}$$

With this assumption, Equation 22 can be re-written as follows:

$$I_{ij} = \theta + G_c \sum_{\substack{i'=0 \\ i' \neq i}}^{N} \sum_{j'=0}^{N_{i'}} q_{i'j'} I_{i'j'} . \qquad \text{(Equation 24)}$$

The right term is independent of $j$. Therefore, $I_i \equiv I_{ij} \, \forall j$, and Equation 23 can be re-written as follows:

$$I_i = \theta + G_c \sum_{\substack{i'=0 \\ i' \neq i}}^{N} I_{i'} \sum_{j'=0}^{N_{i'}} q_{i'j'} = \theta + G_c \left( \sum_{i'=0}^{N} I_{i'} q_{i'} - I_i q_i \right) \quad \forall i \qquad \text{(Equation 25)}$$

From this set of equations (valid for any cell $C_i$) it is possible to express the interference of any cell, say cell $C_0$, as a function of the loads $q_i$ of all cells and the constant $G_c$. This can be achieved by first considering Equation 24 for $i = 0$ specifically:

$$I_0 = \theta + G_c \sum_{i'=0}^{N} I_{i'} q_{i'} - G_c I_0 q_0 \qquad \text{(Equation 26)}$$

Then, combining it with the general equation in $i$, the following equations are obtained:

$$I_i = I_0 + G_c I_0 q_0 - G_c I_i q_i, \text{ or} \qquad \text{(Equation 27)}$$

$$I_i = I_0 \frac{1 + G_c q_0}{1 + G_c q_i} \quad \forall i. \qquad \text{(Equation 28)}$$

Let $C_0$ represent the target cell to which codes are being allocated to and $C_i$ represent a neighboring cell. As such, the load $q_0$ of $C_0$ will change following the allocation of the codes.

Let $q_0^{in}$ represent the initial load of $C_0$, prior to the allocation of codes. Let $q_0^{f}$ represent the final load of $C_0$, following the allocation of codes. Then,

$$q_0^{f} = q_0^{in} + L \times SIR \qquad \text{(Equation 29)}$$

8

Equation 28 must be satisfied both prior to and following the allocation of codes to $C_0$. That is,

$$I_i^{in} = I_0^{in} \frac{1 + G_c q_0^{in}}{1 + G_c q_i} \quad \forall i \qquad \text{(Equation 30)}$$

and

$$I_i^f = I_0^f \frac{1 + G_c q_0^f}{1 + G_c q_i} \quad \forall i \qquad \text{(Equation 31)}$$

where $I_0^{in}$ and $I_0^f$ represent respectively the initial and final interference in target cell $C_0$, and $I_i^{in}$ and $I_i^f$ represent respectively the initial and final interference in neighbor cell $C_i$.

The noise rise in neighbor cell $C_i$ is then given by:

$$R_N = \frac{I_i^f}{I_i^{in}} = \frac{I_0^f}{I_0^{in}} \times \frac{1 + G_c q_o^f}{1 + G_c q_o^{in}}. \qquad \text{(Equation 32)}$$

Equation (32) can be rewritten as:

$$R_N = \frac{I_0^f}{I_0^{in}} \times \frac{1 + G_c(q_o^{in} + L \times SIR)}{1 + G_c q_o^{in}}$$
$$= \frac{I_0^f}{I_0^{in}} \times \left(1 + \frac{G_C \times L \times SIR}{1 + G_c q_o^{in}}\right) \qquad \text{(Equation 33)}$$

When the initial load of $C_0$ is unknown, Equation 33 can be simplified to:

$$R_N = \frac{I_0^f}{I_0^{in}} \times (1 + G_C \times L \times SIR) \qquad \text{(Equation 34)}$$

by setting $q_0^{in}$ to zero. $R_T$ corresponds to the noise rise calculated according to Equation 2.

Figure 4 is a block diagram of an apparatus 400 used to implement CAC in accordance with the present invention. The apparatus 400 communicates with a core network 420 and a WTRU 430, and may reside in an RNC or a Node-B, or any other network entity which is responsible for CAC and radio resource allocation.

The apparatus 400 includes a receiver 402, a code selector 404, a first calculation unit 406, a comparator 408, a second calculation unit 410, and a controller 412. Once a call request is received from the WTRU 430 or the core network 420, the controller 412 initiates a CAC process in accordance with the present invention. The code selector 404 selects a code among available codes in response to the controller 412. The selected code is evaluated for potential allocation to each of available timeslots through calculation of an estimated target cell load and neighbor cell loads based on UL interference, or through calculation of an estimated target cell transmission power and neighbor cell transmission power based on DL interference.

If the CAC process is based on UL interference, the first calculation unit 406 calculates a target cell load and a neighbor cell load for each available timeslot using Node-B measurements and assuming addition of the selected code. The comparator 408 compares the target cell load and the neighbor cell load with predetermined thresholds, respectively. If both the target cell load and the neighbor cell load are below the thresholds, respectively, the code is added to the timeslot for potential allocation. The second calculation unit 410 calculates a weighted system load for the timeslot. The controller 412 controls the overall process and selects a timeslot having a smallest weighted system load among candidate timeslots to allocate for the call request.

If the CAC is based on DL interference, the first calculation unit 406 calculates a target cell transmission power and a neighbor cell transmission power for each available timeslot using Node-B measurements and assuming addition of the selected code. The comparator 408 compares the target cell transmission power and the neighbor cell transmission power with predetermined thresholds, respectively. If both the target cell transmission power and the neighbor cell transmission power are below the thresholds, respectively, the code is added to the timeslot for potential allocation. The second calculation unit 410 calculates a weighted interference for the timeslot. The controller 412 selects a timeslot having a smallest weighted interference among candidate timeslots to allocate for the call request. It is noted that the functions performed by the components with the apparatus 400 may be performed by more or less components as desired.

**Claims**

1. A method of implementing a call admission control process at a Node-B of a wireless communication system (300) comprising at least one Node-B and at least one wireless transmit/receive unit (430), WTRU, the method comprising the steps of:

(a) receiving a call request;
(b) selecting a particular code from a code set; and
(c) selecting a particular timeslot from a plurality of available timeslots;

**characterized by**:

(d) calculating a target cell load and a neighbor cell load for the selected timeslot using Node-B measurements and assuming addition of the selected code to the selected timeslot;
(e) calculating a weighted system load for the selected timeslot;
(f) repeating steps (c)-(e) for all other available timeslots;
(g) selecting a timeslot having a smallest weighted system load for allocation of the code; and
(h) removing the code from the code set.

2. The method of claim 1 wherein the weighted system load is calculated only if both the target cell load and the neighbor cell load are below predetermined thresholds, respectively.

3. The method of claim 1 wherein the code is selected starting from a code having a smallest spreading factor.

4. The method of claim 1 wherein the target cell load is calculated using a predicted interference signal code power (ISCP) of the target cell.

5. The method of claim 4 wherein the predicted ISCP in the target cell is calculated using a noise rise function of the target cell.

6. The method of claim 5 wherein the noise rise function of the target cell is calculated using reported path loss measurements.

7. The method of claim 5 wherein the noise rise function of the target cell is calculated using a path loss value parameter determined from a distribution of path losses measured throughout the cell.

8. The method of claim 7 wherein the path loss value parameter is set to 50th percentile path loss of the distribution.

9. The method of claim 1 wherein the neighbor cell load is calculated using an ISCP measured by the neighbor cell.

10. The method of claim 1 wherein the neighbor cell load is estimated with a noise rise function of the target cell.

11. The method of any one of claims 1-8 or 10, wherein
said target cell load is defined by a predicted target cell transmission power;
said neighbor cell load is defined by a predicted neighbor cell transmission power; and
said weighted system load is defined by a weighted interference.

12. An apparatus (400) for admission control based on common measurements of a Node-B in a wireless communication system (300), a coverage area of the wireless communication system being divided into a plurality of cells and each cell being served by at least one Node-B, the apparatus comprising:

a receiver (402) configured to receive a call request; and
a code selector (404) configured to select a code among available codes;

**characterized in that** the apparatus further comprises:

a first calculation unit (406) configured to calculate a target cell load and a neighbor cell load for each available timeslot using Node-B measurements and assuming addition of the selected code,
a second calculation unit (410) for calculating a weighted system load for each of the available timeslots; and
a controller (412) for selecting a timeslot having a smallest weighted system load to allocate for the call request.

13. The apparatus of claim 12 further comprising a comparator (408) for comparing the target cell load and the neighbor cell load of each available timeslot with predetermined thresholds, respectively, whereby the weighted system load is calculated for available timeslots satisfying the thresholds.

14. The apparatus of claim 12 wherein the code is selected starting from a code having a smallest spreading factor.

15. The apparatus of claim 12 wherein the target cell load is calculated using a predicted interference signal code power (ISCP) of the target cell.

16. The apparatus of claim 15 wherein the predicted ISCP in the target cell is calculated using a noise rise function of the target cell.

17. The apparatus of claim 16 wherein the noise rise function of the target cell is calculated using reported path loss measurements.

18. The apparatus of claim 16 wherein the noise rise function of the target cell is calculated using a path loss value parameter determined from a distribution of path losses measured throughout the cell.

19. The apparatus of claim 18 wherein the path loss value parameter is set to 50th percentile path loss of the distribution.

20. The apparatus of claim 12 wherein the neighbor cell load is calculated using an ISCP measured by the neighbor cell.

21. The apparatus of claim 12 wherein the neighbor cell load is estimated with a noise rise function of the target cell.

22. The apparatus of any one of claims 12-19 or 21, wherein
said target cell load is defined by a predicted target cell transmission power ;
said neighbor cell load is defined by a predicted neighbor cell transmission power ; and
said weighted system load is defined by a weighted interference.

**Patentansprüche**

1. Verfahren zum Implementieren eines Verbindungszulassungsregelungsprozesses an einem Node B eines drahtlosen Kommunikationssystems (300), das zumindest einen Node B und zumindest eine drahtlose Sende-/Empfangseinheit (430) WTRU aufweist, wobei das Verfahren die folgenden Schritte aufweist:

(a) Empfangen einer Verbindungsanforderung;
(b) Auswählen eines bestimmten Codes aus einem Codesatz; und
(c) Auswählen eines bestimmten Zeitschlitzes aus einer Vielzahl verfügbarer Zeitschlitze;
**gekennzeichnet durch**:
(d) Berechnen einer Last der Zielzelle und einer Last der Nachbarzelle für den ausgewählten Zeitschlitz unter Verwendung von Node-B-Messungen und der Annahme, daß der ausgewählte Code zu dem ausgewählten Zeitschlitz hinzugefügt ist;
(e) Berechnen einer gewichteten Systemlast für den ausgewählten Zeitschlitz;

(f) Wiederholen der Schritte (c) - (e) für alle anderen verfügbaren Zeitschlitze;
(g) Auswählen eines Zeitschlitzes mit einer kleinsten gewichteten Systemlast für die Zuweisung des Codes; und
(h) Entfernen des Codes aus dem Codesatz.

2. Verfahren nach Anspruch 1, wobei die gewichtete Systemlast nur berechnet wird, wenn sowohl die Last der Zielzelle als auch die Last der Nachbarzelle jeweils unter vorbestimmten Schwellwerten sind.

3. Verfahren nach Anspruch 1, wobei der Code beginnend bei einem Code mit einem kleinsten Spreizfaktor ausgewählt wird.

4. Verfahren nach Anspruch 1, wobei die Last der Zielzelle unter Verwendung einer vorhergesagten Interferenzsignal-Codeleistung (ISCP) der Zielzelle berechnet wird.

5. Verfahren nach Anspruch 4, wobei die vorhergesagte ISCP in der Zielzelle unter Verwendung einer Rauschanstiegsfunktion der Zielzelle berechnet wird.

6. Verfahren nach Anspruch 5, wobei die Rauschanstiegsfunktion der Zielzelle unter Verwendung gemeldeter Funkfelddämpfungsmessungen berechnet wird.

7. Verfahren nach Anspruch 5, wobei die Rauschanstiegsfunktion der Zielzelle unter Verwendung eines Funkfelddämpfungswertparameters berechnet wird, der aus einer Verteilung von über die Zelle hinweg gemessenen Funkfelddämpfungen bestimmt wird.

8. Verfahren nach Anspruch 7, wobei der Funkfelddämpfungswertparameter auf die 50-prozentige Funkfelddämpfung der Verteilung gesetzt wird.

9. Verfahren nach Anspruch 1, wobei die Last der Nachbarzelle unter Verwendung einer von der Nachbarzelle gemessenen ISCP berechnet wird.

10. Verfahren nach Anspruch 1, wobei die Last der Nachbarzelle mit einer Rauschanstiegsfunktion der Zielzelle geschätzt wird.

11. Verfahren nach einem der Ansprüche 1 - 8 oder 10, wobei
die Last der Zielzelle durch eine vorhergesagte Übertragungsleistung der Zielzelle definiert ist;
die Last der Nachbarzelle durch eine vorhergesagte Übertragungsleistung der Nachbarzelle definiert ist; und
die gewichtete Systemlast durch eine gewichtete Interferenz definiert ist.

12. Vorrichtung (400) für die Verbindungszulassungsregelung auf der Basis gemeinsamer Messungen eines Node B in einem drahtlosen Kommunikationssystem (300); wobei ein Abdeckungsbereich des drahtlosen Kommunikationssystems in mehrere Zellen unterteilt ist und jede Zelle von mindestens einem Node B betreut wird, wobei die Vorrichtung aufweist:

einen Empfänger (402), der für den Empfang einer Verbindungsanforderung konfiguriert ist;
einen Codewähler (404), der für das Auswählen eines bestimmten Codes aus verfügbaren Codes konfiguriert ist;

**dadurch gekennzeichnet, daß** die Vorrichtung ferner aufweist:

eine erste Berechnungseinheit (406), die für die Berechnung einer Last der Zielzelle und einer Last der Nachbarzelle für jeden verfügbaren Zeitschlitz unter Verwendung von Node-B-Messungen und der Annahme, daß der ausgewählte Code hinzugefügt ist, konfiguriert ist;
eine zweite Berechnungseinheit (410), die für die Berechnung einer gewichteten Systemlast für jeden der verfügbaren Zeitschlitze konfiguriert ist; und
eine Steuerung (412) zum Auswählen eines Zeitschlitzes mit einer kleinsten gewichteten Systemlast, der für die Verbindungsanforderung zugewiesen werden soll.

13. Vorrichtung nach Anspruch 12, die ferner einen Vergleicher (408) zum Vergleichen der Last der Zielzelle und der Last der Nachbarzelle jedes verfügbaren Zeitschlitzes mit jeweils vorbestimmten Schwellwerten aufweist, wobei die gewichtete Systemlast für verfügbare Zeitschlitze berechnet wird, welche die Schwellwerte erfüllen.

**14.** Vorrichtung nach Anspruch 12, wobei der Code beginnend bei einem Code mit einem kleinsten Spreizfaktor ausgewählt wird.

**15.** Vorrichtung nach Anspruch 12, wobei die Last der Zielzelle unter Verwendung einer vorhergesagten Interferenzsignal-Codeleistung (ISCP) der Zielzelle berechnet wird.

**16.** Vorrichtung nach Anspruch 15, wobei die vorhergesagte ISCP in der Zielzelle unter Verwendung einer Rauschanstiegsfunktion der Zielzelle berechnet wird.

**17.** Vorrichtung nach Anspruch 16, wobei die Rauschanstiegsfunktion der Zielzelle unter Verwendung gemeldeter Funkfelddämpfungsmessungen berechnet wird.

**18.** Vorrichtung nach Anspruch 16, wobei die Rauschanstiegsfunktion der Zielzelle unter Verwendung eines Funkfelddämpfungswertparameters berechnet wird, der aus einer Verteilung von über die Zelle hinweg gemessenen Funkfelddämpfungen bestimmt wird.

**19.** Vorrichtung nach Anspruch 18, wobei der Funkfelddämpfungswertparameter auf die 50-prozentige Funkfelddämpfung der Verteilung gesetzt wird.

**20.** Vorrichtung nach Anspruch 12, wobei die Last der Nachbarzelle unter Verwendung einer von der Nachbarzelle gemessenen ISCP berechnet wird.

**21.** Vorrichtung nach Anspruch 12, wobei die Last der Nachbarzelle mit einer Rauschanstiegsfunktion der Zielzelle geschätzt wird.

**22.** Vorrichtung nach einem der Ansprüche 12 - 19 oder 21, wobei
die Last der Zielzelle durch eine vorhergesagte Übertragungsleistung der Zielzelle definiert ist;
die Last der Nachbarzelle durch eine vorhergesagte Übertragungsleistung der Nachbarzelle definiert ist; und
die gewichtete Systemlast durch eine gewichtete Interferenz definiert ist.

**Revendications**

**1.** Procédé de mise en place d'un processus de contrôle d'admission d'appel au niveau d'un noeud B d'un système de communication sans fil (300) comprenant au moins un noeud B et au moins une unité de transmission/réception sans fil (430), WTRU, le procédé comprenant les étapes consistant à :

(a) recevoir une demande d'appel ;
(b) sélectionner un code particulier à partir d'un ensemble de codes ; et
(c) sélectionner un intervalle de temps particulier à partir d'une pluralité d'intervalles de temps disponibles ;

**caractérisé par** :

(d) le calcul d'une charge d'une cellule cible et d'une charge d'une cellule voisine pour l'intervalle de temps sélectionné en utilisant les mesures du noeud B et en supposant l'ajout du code sélectionné à l'intervalle de temps sélectionné ;
(e) le calcul d'une charge pondérée du système pour l'intervalle de temps sélectionné ;
(f) la répétition des étapes (c) à (e) pour tous les autres intervalles de temps disponibles ;
(g) la sélection d'un intervalle de temps ayant une charge pondérée du système la plus petite pour l'attribution du code ; et
(h) la suppression du code de l'ensemble de codes.

**2.** Procédé selon la revendication 1 dans lequel la charge pondérée du système est calculée seulement si à la fois la charge d'une cellule cible et la charge d'une cellule voisine sont au-dessous des seuils prédéterminés, respectivement.

**3.** Procédé selon la revendication 1 dans lequel le code est sélectionné en commençant à partir d'un code ayant un facteur d'étalement le plus petit.

**4.** Procédé selon la revendication 1 dans lequel la charge d'une cellule cible est calculée en utilisant une puissance de code prédite du signal d'interférence (ISCP) de la cellule cible.

**5.** Procédé selon la revendication 4 dans lequel l'ISCP prédite dans la cellule cible est calculée en utilisant une fonction d'augmentation du bruit de la cellule cible.

**6.** Procédé selon la revendication 5 dans lequel la fonction d'augmentation du bruit de la cellule cible est calculée en utilisant les mesures d'affaiblissement de propagation rapportées.

**7.** Procédé selon la revendication 5 dans lequel la fonction d'augmentation du bruit de la cellule cible est calculée en utilisant un paramètre de valeur d'un affaiblissement de propagation déterminé à partir d'une distribution des affaiblissements de propagation mesurés partout dans la cellule.

**8.** Procédé selon la revendication 7 dans lequel le paramètre de valeur d'un affaiblissement de propagation est défini au 50$^{\text{ème}}$ centile de l'affaiblissement de propagation de la distribution.

**9.** Procédé selon la revendication 1 dans lequel la charge d'une cellule voisine est calculée en utilisant une ISCP mesurée par la cellule voisine.

**10.** Procédé selon la revendication 1 dans lequel la charge d'une cellule voisine est estimée avec une fonction d'augmentation du bruit de la cellule cible.

**11.** Procédé selon l'une quelconque des revendications 1 à 8 ou 10, dans lequel ladite charge d'une cellule cible est définie par une puissance de transmission d'une cellule cible prédite ;
ladite charge d'une cellule voisine est définie par une puissance de transmission d'une cellule voisine prédite ; et
ladite charge pondérée du système est définie par une interférence pondérée.

**12.** Appareil (400) pour un contrôle d'admission basé sur les mesures communes d'un noeud B dans un système de communication sans fil (300) ; une zone de couverture du système de communication sans fil étant divisée en une pluralité de cellules et chaque cellule étant desservie par au moins un noeud B, l'appareil comprenant :

un récepteur (402) configuré pour recevoir une demande d'appel ; et
un sélecteur de code (404) configuré pour sélectionner un code parmi les codes disponibles ;

**caractérisé en ce que** l'appareil comprend en outre :

une première unité de calcul (406) configurée pour calculer une charge d'une cellule cible et une charge d'une cellule voisine pour chaque intervalle de temps disponible en utilisant les mesures du noeud B et en supposant l'ajout du code sélectionné,
une deuxième unité de calcul (410) pour calculer une charge pondérée du système pour chacun des intervalles de temps disponibles ; et
une unité de commande (412) pour sélectionner un intervalle de temps ayant une charge pondérée du système la plus petite pour attribuer la demande d'appel.

**13.** Appareil selon la revendication 12 comprenant en outre un comparateur (408) pour comparer la charge d'une cellule cible et la charge d'une cellule voisine de chaque intervalle de temps disponible à des seuils prédéterminés, respectivement, de telle manière que la charge pondérée du système soit calculée pour les intervalles de temps disponibles satisfaisant les seuils.

**14.** Appareil selon la revendication 12 dans lequel le code est sélectionné en commençant à partir d'un code ayant un facteur d'étalement le plus petit.

**15.** Appareil selon la revendication 12 dans lequel la charge d'une cellule cible est calculée en utilisant une puissance de code prédite du signal d'interférence (ISCP) de la cellule cible.

**16.** Appareil selon la revendication 15 dans lequel l'ISCP prédite dans la cellule cible est calculée en utilisant une fonction d'augmentation du bruit de la cellule cible.

**17.** Appareil selon la revendication 16 dans lequel la fonction d'augmentation du bruit de la cellule cible est calculée en utilisant les mesures d'affaiblissement de propagation rapportées.

**18.** Appareil selon la revendication 16 dans lequel la fonction d'augmentation du bruit de la cellule cible est calculée en utilisant un paramètre de valeur d'un affaiblissement de propagation déterminé à partir d'une distribution des affaiblissements de propagation mesurés partout dans la cellule.

**19.** Appareil selon la revendication 18 dans lequel le paramètre de valeur d'un affaiblissement de propagation est défini au 50ème centile de l'affaiblissement de propagation de la distribution.

**20.** Appareil selon la revendication 12 dans lequel la charge d'une cellule voisine est calculée en utilisant une ISCP mesurée par la cellule voisine.

**21.** Appareil selon la revendication 12 dans lequel la charge d'une cellule voisine est estimée avec une fonction d'augmentation du bruit de la cellule cible.

**22.** Appareil selon l'une quelconque des revendications 12 à 19 ou 21, dans lequel ladite charge d'une cellule cible est définie par une puissance de transmission d'une cellule cible prédite ;
ladite charge d'une cellule voisine est définie par une puissance de transmission d'une cellule voisine prédite ; et
ladite charge pondérée du système est définie par une interférence pondérée.

<u>100</u>

START

102 — SELECT THE CODE WITH THE SMALLEST SF

104 — SELECT THE FIRST TIMESLOT AMONGST AVAILABLE TIMESLOTS

106 — COMPUTE TARGET CELL AND NEIGHBOR CELL LOADS FOR SELECTED TIMESLOT

108 — ADMISSION CONTROL VERIFICATION ?

FAILURE          SUCCESS

110 — ADD TIMESLOT TO LIST OF CANDIDATE TIMESLOTS AND ADD THE CODE TO THE TIMESLOT

112 — COMPUTE AND RECORD THE WEIGHTED SYSTEM LOAD FOR THIS TIMESLOT

114 — ANY MORE AVAILABLE TIMESLOTS?

NO          YES

116 — SELECT THE NEXT TIMESLOT FROM THE LIST OF AVAILABLE TIMESLOTS

118 — ANY CANDIDATE TIMESLOTS?

NO          YES

130 — EXIT INDICATING FAILURE; REJECT REQUESTED CODE SET

120 — SELECT CANDIDATE TIMESLOT WITH SMALLEST WEIGHTED SYSTEM LOAD

122 — REMOVE THE CODE FROM THE CODE SET

124 — RESET THE LIST OF CANDIDATE TIMESLOTS

126 — ANY MORE CODES IN THE CODE SET?          YES

NO

128 — EXIT INDICATING SUCCESS; RETURN ASSIGNMENT SOLUTION

END

*FIG. 1*

**200**

```
                    ( START )
                        │
202 ─ SELECT THE FIRST CODE FROM THE CODE SET
                        │
204 ─ SELECT THE FIRST TIMESLOT AMONGST AVAILABLE TIMESLOTS
                        │
206 ─ COMPUTE THE PREDICTED INTERFERENCE LEVEL AND THE PREDICTED CARRIER POWER IN THE SELECTED TIMESLOT
                        │
       208 ─  ◇ ADMISSION CONTROL VERIFICATION ? ◇
   FAILURE ←──                            ──→ SUCCESS
                                              │
                        210 ─ ADD TIMESLOT TO LIST OF
                              CANDIDATE TIMESLOTS AND ADD
                              THE CODE TO THE TIMESLOT
                                              │
                        212 ─ COMPUTE AND RECORD
                              THE WEIGHTED SYSTEM
                              LOAD FOR THIS TIMESLOT
                                              │
       214 ─ ◇ ANY MORE AVAILABLE TIMESLOTS? ◇
     NO ←──                              ──→ YES
        │                                     │
218 ─ ◇ ANY CANDIDATE TIMESLOTS? ◇    216 ─ SELECT THE NEXT
  NO ←──            ──→ YES                   TIMESLOT FROM
     │                  │                     THE LIST OF
230 ─ EXIT INDICATING   220 ─ SELECT CANDIDATE AVAILABLE
     FAILURE; REJECT          TIMESLOT WITH     TIMESLOTS
     REQUESTED               SMALLEST WEIGHTED
     CODE SET                INTERFERENCE LEVEL
     │                         │
     │                  REMOVE THE CODE FROM THE CODE SET
     │             222 ─       │
     │             224 ─ RESET THE LIST OF CANDIDATE TIMESLOTS
     │                         │
     │       226 ─ ◇ ANY MORE CODES IN THE CODE SET? ◇ ──→ YES
     │                         │ NO
     │             228 ─ EXIT INDICATING SUCCESS; RETURN
     │                   ASSIGNMENT SOLUTION
     │                         │
     └─────────────────→ ( END )
```

*FIG. 2*

_300_

**FIG. 3**

**FIG. 4**

**EP 1 687 904 B1**

**REFERENCES CITED IN THE DESCRIPTION**

**Patent documents cited in the description**

- US 20030031147 A